# EUROPEAN PATENT APPLICATION

(11) **EP 4 545 420 A1**
(43) Date of publication of application: **30.04.2025**
(21) Application number: 23383086.8
(22) Date of filing: 24.10.2023
(51) Int. Cl.: B64D 39/04, F16L 11/08, F16L 11/127

(54) **AIR TO AIR REFUELING HOSE**

(71) Applicant: Airbus Defence and Space, S.A.U., 28022 Madrid (ES)
(72) Inventor: JIMÉNEZ OLAZÁBAL, Andrés, E-28022 Madrid (ES); PAYO GOMEZ, Miguel, E-28022 Madrid (ES)
(74) Representative: ABG Intellectual Property Law, S.L.

(57) **Abstract**

The present invention belongs to the field of air to air refueling for aircraft, in particular to the operations with hose and drogue systems for automatizing the response of the system to contact between a tanker aircraft and a receiver while automatizing hose maintenance tasks.

## Description

### TECHNICAL FIELD OF THE INVENTION

The present invention belongs to the field of air to air refueling for aircraft, in particular to the operations with hose and drogue systems for automatizing the response of the system to contact between a tanker aircraft and a receiver while automatizing hose maintenance tasks.

### BACKGROUND OF THE INVENTION

Air to air refueling is a very complex operation, as both the tanker and the receiver aircraft are flying, and this fact raises a great amount of circumstances that may disturb the positioning of said aircraft: speed of aircraft, swirls, clouds, etc. Further, the extremely narrow tolerance allowed in this operation makes it quite delicate.

Different systems may be used for refueling. One of the most used is the hose and drogue system. A tanker aircraft comprises a refueling pod or fuselage refueling unit with a hose to provide fuel to a receiver aircraft. Before starting the refueling process, the hose is wrapped in a drum located in the pod. A drogue and a coupling are both attached at the end of the hose to provide the necessary drag force and to allow the receiver aircraft probe connection.

The drogue and coupling of a hose could be damaged by impacts with the receiver aircraft probe while attempting to contact. The hose may be damaged because of friction with previous hose turns or by wear against adjacent structure while wrapping in the drum. These damages can occur in flight or after the hose being extended for maintenance or visual inspections, where there is an additional risk of the hose being damaged by friction with the pavement or ground support equipment being used for this operation. In any of these cases, a damaged hose may have negative effects in safety or aircraft refueling operation.

Therefore, the air to air refueling hose needs to be periodically checked to confirm the absence of damages. This periodic check is usually done by visual inspection which requires the hose to be fully extended. In addition to visual inspection, several other inspection methods are being investigated to evaluate their capability to identify hose internal or external damages. However, these methods also require the hose to be extended.

Visual inspections are done to check the absence of dangerous damages in the hose which could cause a fuel leak or affect the structural integrity of the hose which could end in a hose detachment in flight. These known visual inspection methods present several disadvantages. The internal structure of the hose can be degraded (broken or corroded) without being detectable by external visual inspections, thus, hidden damages are not detectable. Further, these damages may cause hose rupture in flight and consequently the receiving aircraft may suffer impact due to the detached hose. Also, these visual methods require the work of several people to carry out the hose inspection and the effort of many people to move hose loads, for extending it and retracting it. Further, this could cause injury to the people involved in those activities. In addition to added workload and time consumption for maintenance staff, extension and retraction of the hose affects aircraft schedule. Sometimes tension done by the ground people to manually extend/rewind the hose cannot be controlled and there is a risk to incorrectly wrap the hose in the drum after being extended for inspection. Furthermore, friction to ground support equipment may also cause large hose damages, thus reducing their life.

Other aspect is that current hose and drogue system operates without measuring the fuel pressure in the coupling-drogue and an estimation of the pressure according to the flight conditions is performed from the fuel pressure sensor installed close to the drum of the tanker aircraft. In addition, current system does not implement a direct measurement of contact detection between the coupling of the hose and the probe of the receiver aircraft. Main reason why these sensors are not possible is that in order to place them at the end of the hose (where the drogue and coupling are placed), a power source is needed, and due to space and weight restrictions, batteries are not feasible.

Therefore, the present invention provides an improved hose with an optimize system response to contact between the tanker aircraft and the receiver aircraft and automatization of maintenance tasks.

### SUMMARY OF THE INVENTION

The present invention provides a solution for the aforementioned problems, by an air to air refueling hose according to claim 1 and an aircraft according to claim 12. In dependent claims, embodiments of the invention are defined.

In a first inventive aspect, the present invention provides air to air refueling hose for an aircraft, the air to air refueling hose comprising a first end configured to be connected to the aircraft and a second end configured to be connected to a coupling that in turn is connected to a drogue, the air to air refueling hose further comprising:
an inner tubular structure suitable for driving fuel inside,
an intermediate tubular structure arranged around the inner tubular structure and comprising a support spring, the support spring being helically wound around the inner tubular structure and connected to first and second end of the air to air refueling hose, and
an external tubular structure arranged around the intermediate tubular structure in such a way that the intermediate tubular structure is located between the inner tubular structure and the external tubular structure,
wherein the intermediate tubular structure further comprises:
a braided mesh arranged around the support spring and being made of textile or metallic material; and
a first plurality of coated conductive wires wound along the air to air refueling hose over the braided mesh;

wherein, if the braided mesh is a braided textile mesh, the intermediate tubular structure further comprises a braid of uncoated conductive wires arranged around the support spring so that the braided mesh is located between the support spring and the braid and the first plurality of coated conductive wires is arranged above the uncoated conductive wires of the braid, this braid being electrically connected to the first and second end of the air to air refueling hose and being configured to drain electric current towards the first and second end of the air to air refueling hose; and
wherein the air to air refueling hose is configured through the intermediate tubular structure:
   to provide power from the aircraft to the coupling and/or drogue and
   to transmit data from the aircraft to the coupling and/or drogue and vice versa.

The air to air refueling hose, hereinafter hose, is intended to be connected in a first end to an aircraft and in a second end to an air refueling coupling and this coupling in turn connected to a drogue.

In an embodiment, when the hose is extended "tensed" it will be understood that the hose is extended along a longitudinal axis that runs from one end of the hose to the other end, that is, from the first end to the second end. The expression "tensed" will be understood as the position in which the hose is arranged with its entire structure being coaxial to such longitudinal axis.

The present air to air refueling hose is formed by a plurality of structures one inside the other. These structures will be understood as cylindrical structures coaxial to the longitudinal axis when the hose is extended "tensed". These structures may be made of materials having different rigidity. Preferably, the rigidity of the intermediate tubular structure is greater than the rigidity of the inner tubular structure and the rigidity of the external tubular structure. Particularly, the intermediate tubular structure is a rigid or semi-rigid structure. Since the air to air refueling hose may be subjected to loads in operative activities, such rigid or semi-rigid intermediate tubular structure is advantageously resistant to axial and/or radial strength. The inner tubular structure and the external tubular structure of the air to air refueling hose provide the hose with sufficient imperviousness and flexibility together with the rigidity of the intermediate tubular structure for the supply operation to be effective.

From the inside of the hose to the outside, first there is an inner tubular structure that is intended for driving fuel inside along the hose from the first end to the second end of the air to air refueling hose. Then, there is an intermediate tubular structure which will be responsible for providing power and transmitting data between the aircraft and the drogue and vice versa. This intermediate tubular structure is located around the inner tubular structure. By last, there is an external tubular structure around the intermediate tubular structure, the intermediate tubular structure being located embedded between the inner tubular structure and the external tubular structure.

This intermediate tubular structure comprises at least a support spring, a braided mesh, a first plurality of coated conductive wires and also a braid if the braided mesh is a textile braided mesh.

The support spring is helically wound along the intermediate tubular structure and around the inner tubular structure between the first and second end of the hose, so that this support spring is connected to said first and second ends of the hose. In an embodiment, the support spring is a support wire. The helically wound support spring is coaxial to the longitudinal axis when the hose is extended "tensed". In addition, the support spring is also suitable to provide power and transmit data between the hose ends in order to keep the drogue connected in power and data to the aircraft.

Then, there is a braided mesh arranged along the hose and around the support spring so that the support spring is placed between the braided mesh and the inner tubular structure. Advantageously, this support spring of the intermediate tubular structure avoids the braided mesh from radially compressing the inner tubular structure, and also is resistant to the radial strength. In addition, the braided mesh advantageously is resistant to the axial and radial strength.

The braided mesh can be made of a textile material (hereafter braided textile mesh) or a metallic material (hereafter braided metallic mesh).

If the braided mesh is a braided textile mesh, there is a braid arranged around the braided textile mesh along the intermediate tubular structure and also electrically connected to the first and second end of the hose. The braid comprises a plurality of uncoated conductive wires suitable to drain electric current towards any of the first and second ends of the hose. This braid advantageous allows conductivity, electrostatic discharge and lightning strike drainage. That is, the braid is electrically configured to conduct the peak current caused by an electrostatic discharge or a direct lighting impact towards the connection of the braid to the both first and second ends of the hose. The conductive wires of the braid are not isolated between them in order to keep the lowest resistance and lowest inductance between both ends of the hose to maximize the current drain capability for the hose.

If the intermediate tubular structure comprises a braided metallic mesh, instead of a braided textile mesh, the braided mesh itself, being metallic, e.g. stainless steel, is conductive, so in case of a lightning strike it is able to drain the lightning.

Furthermore, there is a first plurality of coated conductive wires wound along the hose between the first and second end of the hose. Specifically, this first plurality of coated conductive wires is arranged over the braided mesh and, if the braided mesh is a braided textile mesh, these conductive coated wires are arranged above the uncoated conductive wires of the braid. These coated conductive wires are suitable to provide power and transmit data through them so that they can transmit power and data from between the aircraft and the drogue.

Since both the support spring and the coated conductive wires are able to provide power and transmit data, the present air to air refueling hose is configured to transmit through the intermediate tubular structure power from the aircraft to the coupling and/or drogue and data from the aircraft to the coupling and/or drogue and vice versa.

Advantageously, the present air to air refueling hose allows to carry power and to feed possible stabilizing systems of the drogue. When the receiver aircraft performs a maneuver in order to make contact with the drogue through the probe of the air to air refueling hose, a phenomenon called bow effect appears, which moves the drogue from its equilibrium position due to aerodynamic interference with receiver's probe and fuselage. This disequilibrium would be controlled by actuating some actuator, electronics, etc. thanks to the electrical power and commands (in the form of data) transmission through the hose.

Additionally, the present air to air refueling hose allows a real time automatic damage detection on the hose. Since power provision and data transmission are carried out in the outermost part of the hose (in the intermediate tubular structure), in case of the external tubular structure is damaged, the intermediate tubular structure will be the first to suffer damage (before any dangerous damage in hose structural reinforcements). It is also allowed to constantly monitor the electrical conductivity though the intermediate tubular structure of the hose, so that is any of the wires that transmits conductivity breaks, conductivity reduction will be detected. That is, if there is damage in the hose affecting the intermedia structure when electric current is transmitted through this intermediate tubular structure, such electric current is stopped or broken as a result of the damage, and this is detected in the hose ends due to an impedance increase. Detection of electric current break or stop through the intermediate tubular structure is indicative of the presence of damage in the air to air refueling hose.

Furthermore, the present hose with the provision of such intermediate tubular structure advantageously reduces the hose inspection maintenance tasks on ground as the hose can be monitored at any time. That is, the present invention avoids the need to extend and retract the hose to be inspected.

The configuration of said intermediate tubular structure in the present hose, advantageously, provides cost saving considering the reduction in flight line maintenance personnel and people-hours dedicated to this task along the operative life of a tanker aircraft where the present air to air refueling hose is installed.

Additionally, the present air to air refueling hose advantageously provides a more effective and quick inspection method to identify any damage in such hose, thus improving the aircraft dispatch reliability and operational availability.

Moreover, the present air to air refueling hose allows connecting to the end of the hose for future developments for drogue stabilization and autonomous drogue and hose refueling requiring power and communications with the tanker aircraft.

In an embodiment, the braided textile mesh comprises high tensile strength threads made of aramid or the braided metallic mesh comprises high tensile strength threads made of stainless steel. Advantageously, the braided textile mesh provides a corrosion protection for the hose.

As already indicated above, the support spring is placed between the braided mesh and the inner tubular structure. Advantageously, this support spring of the intermediate tubular structure avoids the braided mesh from radially compressing the inner tubular structure, and also is resistant to the radial strength. In addition, the braided mesh advantageously is resistant to the axial and radial strength.

In an embodiment, the intermediate tubular structure further comprises a second plurality of coated conductive wires wound along the air to air refueling hose and arranged above the uncoated conductive wires of the braid, and wherein the air to air refueling hose is configured:
to provide power and transmit data from the aircraft to the coupling and/or drogue through the first plurality of coated conductive wires and
to transmit data from the coupling and/or drogue to the aircraft through the second plurality of coated conductive wires.

In this embodiment, the data transmission and power provision are carried out through the first and second plurality of coated conductive wires. The coated conductive wires of the second plurality have the same properties as the coated conductive wires of the first plurality, these wires being isolated between them. Specifically, a DC power and communication transmission is performed through the isolated wires of the first and second plurality of coated conductive wires within the braid configuration using the electrical conductivity to provide enough power and to transmit data from aircraft to coupling and/or drogue and vice versa.

In another embodiment, the support spring is electrically connected to the first end and second end of the air to air refueling hose, and wherein the air to air refueling hose is configured:
to provide power and transmit data from the aircraft to the coupling and/or drogue through the first plurality of coated conductive wires and
to transmit data from the coupling and/or drogue to the aircraft through the support spring.

According to this embodiment, the data transmission and power provision are carried out through the first plurality of coated conductive wires and the support spring.

In an embodiment, the braid is a mesh that comprises first strands according to a first winding direction and second strands according to a second winding direction, each strand comprises a plurality of uncoated conductive wires parallel to the corresponding winding direction.

More particularly, the first plurality of coated conductive wires and the support spring are arranged according to the first winding direction or to the second winding direction respectively.

This configuration of the braid and the coated conductive wires are explained according to winding directions that are understood when the hose is extended "tensed".

The first strands of the braid are a plurality of uncoated conductive wires helically wound through the hose according to a first winding direction. The second strands of the braid are a plurality of uncoated conductive wires helically wound through the hose according to a second winding direction. The first winding direction being different from the second winding direction. In an embodiment, both first and second winding directions have the same pitch of the helix but different to the helix pitch of the support spring.

The support spring may be wound according to any of the first and second winding directions, and the first plurality of coated conductive wires may be wound according to any of the first and second winding directions.

In an embodiment, the second plurality of coated conductive wires are arranged according to the first winding direction or to the second winding direction.

In an embodiment, the support spring is wound according to the first winding direction and the first and second plurality of coated conductive wires are according to the second winding direction.

In an embodiment, where the first and second plurality of coated conductive wires are arranged according to a second winding direction, and when viewed from above the intermediate tubular layer (i.e. from the external tubular layer), the first and second plurality of coated conductive wires are interleaved between second strands of braid of uncoated conductive wires. That is, one would observe a second strand of the braid, the first plurality of coated conductive wires, another second strand of the braid, the second plurality of coated conductive wires and another second strand of the braid. The same will occur if the first and second plurality of coated conductive wires were arranged according to the first winding direction regarding the first strands of the braid of uncoated conductive wires.

In an embodiment, the first plurality of coated conductive wires is arranged according to the first winding direction and the second plurality of coated conductive wires is arranged according to the second winding direction. In this embodiment when viewed from above the intermediate tubular layer, the first plurality of coated conductive wires is interleaved between two first strands of the braid, the second plurality of coated conductive wires is interleaved between two second strands of the braid, and the first and second plurality of coated conductive wires are intertwined with each other.

In an embodiment, the intermediate tubular structure further comprises:
a first breaker textile fabric arranged around the first plurality of coated conductive wires; and
a second breaker textile fabric arranged around the inner tubular structure and being more proximal to the inner tubular structure than the support spring.

When there is a second plurality of coated conductive wires in the intermediate tubular structure of the hose, the mentioned first breaker textile fabric is arranged around both the first and second plurality of coated conductive wires.

First breaker textile fabric is intended to prevent first and second pluralities of coated conductive wires, as well as the braid of uncoated conductive wires from coming out of the external tubular structure when bending the hose. Second breaker fabric is intended to prevent support spring from damaging inner tubular structure.

The first breaker textile fabric is provided above the power provision wires (coated conductive wires) to maintain the layout of these wires when bending or twisting.

In an embodiment, the inner tubular structure and the external tubular structure are made of non-conductive materials, preferably rubber. Advantageously, the rubber gives flexibility to the present air to air refueling hose.

In a particular embodiment, the intermediate tubular structure is made of metal, preferably non-stainless steel.

In an embodiment, the intermediate tubular structure comprises intermediate layers of non-conductive materials, preferably rubber. Specifically, these intermediate layers are placed between support spring, the braided mesh, coated conductive wires and a braid of uncoated conductive wires. These rubber intermediate layers provides adhesion between one layer and another and for everything to work together as a whole.

In an embodiment, the first and second plurality of coated conductive wires protrude externally from the air to air refueling hose in both first and second ends of the air to air refueling hose. This embodiment ensures that these coated conductive wires can be used to provide power from aircraft to drogue and to transmit a bidirectional data between aircraft and drogue.

In a second inventive aspect, the present invention provides an aircraft comprising an air to air refueling hose according to the first inventive aspect, a coupling and a drogue, wherein the first end of the air to air refueling hose is connected to the aircraft and the second end of the air to air refueling hose is connected to the coupling and then the drogue is couple to the coupling away from the aircraft.

The new configuration of the air to air refueling hose allows the exchange of data between the aircraft and the drogue as well as the power provision from the aircraft to the coupling and drogue.

In an embodiment, the aircraft is a tanker aircraft.

In an embodiment, the coupling comprises a pressure sensor or temperature sensor or inertial sensor or any combination of the above; and/or the drogue comprises a proximity sensor, and wherein these sensors are in data communication with the aircraft through the air to air refueling hose. In a more particular embodiment, the coupling comprises a plurality of pressure sensor or a plurality of temperature sensors or a plurality of inertial sensor or any combination of the above. In another embodiment, the drogue comprises a plurality of proximity sensors.

The pressure sensor is configured to measure the fuel pressure in the tip of the hose and drogue system discarding the estimations currently performed. The hose and drogue system (formed by the present air to air refueling hose and drogue, including the coupling) can operate based on a pressure closed loop with the real measurement of pressure sensor installed in the coupling. Therefore, the real pressure delivered to receiver aircraft will be used to guarantee the operational pressure tolerance +/- 5psi. According to this, there is no need to use an estimation of pressure according to flight conditions.

The temperature sensor is configured to measure the temperature of the fuel inside the hose.

The inertial sensor is configured to measure acceleration and angular velocity in the coupling.

The proximity sensor is configured to measure the aircraft receiver contact approximation. This proximity sensor allows to monitor the receiver contact approximation. In an embodiment, there is also provided a contact sensor in the drogue for transmitting the contact event through electrical signal reducing the detection timing and its confirmation allowing a real detection of hazard contact event and improving the hose and drogue system response to the contact.

In an embodiment, the hose comprises load cells arranged at the second end of the hose and being configured to detect the contact in the joint between the hose and the coupling.

For DC power and communication transmission from aircraft to drogue, some electronics are requested in both ends of the hose.

In an embodiment, the tanker aircraft comprises a DC power supplier and is configured to power the coupling and drogue. According to the electrical voltage drop of wiring inside the hose, the voltage reference of the power supplier in the aircraft is adapted to compensate for these losses in order that the power voltage in the drogue is the preset standard voltage.

In an embodiment, a controlled voltage drop is induced in line from a transmitter (provided in a tanker aircraft) in order to allow an equivalent voltage drop in a receptor (provided in the coupling), these transmitter and receptor being located at the ends of the hose. The voltage drop is used in order to transmit a binary communication understood from both hose ends. This communication is bidirectional as both hose ends are transmitter and receiver. The electronics mounted in tanker aircraft is set as Master and it is the one in charge to schedule the transmitting time for each component.

In an embodiment, the hose comprises a transient voltage suppressor configured to be used between each line of communication and the braid of uncoated conductive wires. Advantageously, this transient voltage suppressor allows protecting the different voltage between the braid of uncoated conductive wires and the coated conductive wires in case of electrostatic discharge or direct lighting impact. Specifically, this transient voltage suppressor protects the electronics avoiding overvoltage during electrostatic discharge or direct lighting impact.

In an embodiment, the air to air refueling hose comprises a dual current sensor configured to measure the power current sent from the transmitter (placed at the tanker aircraft) to the receiver (located at the coupling) and the power current delivered back from the receiver to transmitter. The comparison of these two currents reveals the current that is coming out from the power transmitter that is not delivered back from the receiver. This difference is the current derived to the braid of uncoated conductive wires, which is a direct measurement of the isolation resistance. This measurement is checked continuously allowing the normal operation until the value exceed a certain predefined threshold. Therefore, the provision of this dual current sensor allows to check constantly the isolation resistance between the braid of uncoated conductive wires and the coated conductive wires.

In an embodiment, the first end of the air to air refueling hose is connected to a drum of the aircraft by means of a first fitting, and the second end of the air to air refueling hose is connected to the coupling by means of a second fitting, and wherein this first and second fittings are configured to provide electrical path between the braid of the air to air refueling hose and the aircraft or the coupling respectively. In addition, the connection between the coupling and the drogue also allows for the electrical transmission of the coupling and drogue.

In an embodiment, the first end of the air to air refueling hose is connected to a central fuselage or wing pods of the aircraft. Specifically, the first end of the hose is connected to an aircraft drum located on the central fuselage of the aircraft and/or on the wing pods.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic cross sectional view of a portion of an air to air refueling hose according to an embodiment of the present invention.
- Figure 2: This figure shows a schematic perspective view of a portion of an air to air refueling hose according to an embodiment of the present invention.
- Figure 3: This figure shows an aircraft comprising an air to air refueling hose according to an embodiment of the present invention.

### DETAILED DESCRIPTION OF THE INVENTION

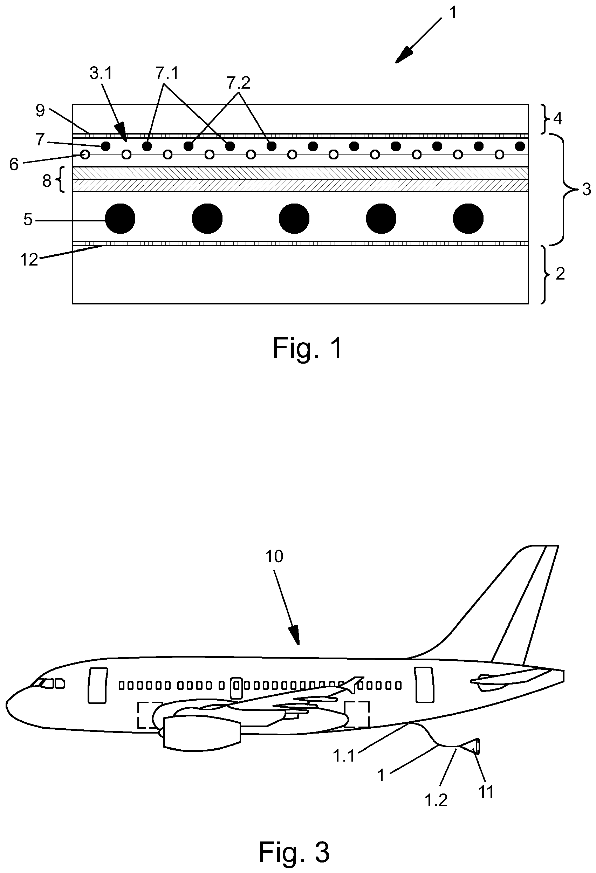

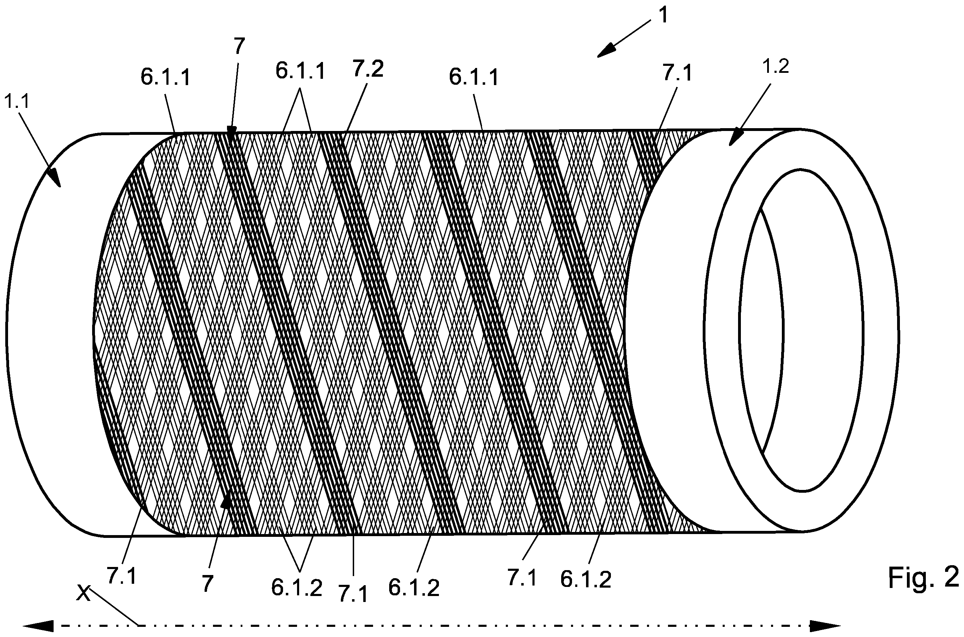

Figure 1 shows a schematic cross sectional view of a portion of an air to air refueling hose (1) according to the present invention. Figures 2 shows a schematic view of the hose (1) shown in figure 1, in particular, when the hose (1) is extended. Figure 3 shows a tanker aircraft (10) comprising a Hose and Drogue system, i.e., the hose (1) of figures 1 and 2 connected to a drogue (11) through a coupling (not shown) provided between an end of the hose (1) and the drogue (11). Specifically, figure 3 shows the hose (1) attached to the central fuselage of a tanker aircraft (10). However, in an embodiment (not shown), the hose (1) described hereinafter can be also attached to the wing pods of the tanker aircraft (10).

The hose (1) described hereafter comprises the following structures or layers from its interior to its exterior, an inner tubular structure (2), an intermedia structure (3) and an external tubular structure (4), according to figure 1. The hose (1) is arranged between a first end (1.1) and a second end (1.2) as shown in figure 2. The first end (1.1) is intended to be connected to the tanker aircraft (10) and the second end (1.2) is intended to be connected to the coupling in a hose and drogue refueling system as figure 3 shown.

These structures (2, 3, 4) of the hose (1) are cylindrical structure arranged along the longitudinal axis (X) of the hose (1) when the hose (1) is extended (as shown in figure 2). When the hose (1) is completely extended or partially extended, that is to say, when the hose (1) is "tensed", the inner tubular structure (2), the intermediate tubular structure (3) and the external tubular structure (4) are coaxial to the longitudinal axis (X).

The inner tubular structure (2) is intended for driving fuel inside along the hose (1) between the first end (1.1) and the second end (1.2) of the hose, that is, for driving fuel from tanker aircraft (10) to the coupling in a refueling process. In the embodiment shown in these figures 1-3, the inner tubular structure (2) is made of rubber, being this rubber a non-conductive material which gives flexibility to the hose (1).

As shown in figure 1, the intermediate tubular structure (3) is arranged around the inner tubular structure (2). This intermediate tubular structure (3) comprises a support spring (5) that is helically wound around the inner tubular structure (2) between the first (1.1) and second (1.2) ends of the hose (1). The support spring (5) is connected to both ends (1.1, 1.2) of the hose (1), prevents what is above it from radially compressing the inner tubular structure (2) and also provides the radial strength.

The intermediate tubular structure (3) further comprises a braided textile mesh (8) arranged around the support spring (5). This braided textile mesh (8) is made of high tensile strength threads to avoid corrosion on the hose (1). In addition, the braided textile mesh (8) provides axial strength and stiffness. In an embodiment, the braided textile mesh (8) is made of aramid such as kevlar, Kuralon, etc.

The intermediate tubular structure (3) also comprises a braid (6) of uncoated conductive wires (6.1) arranged around the braided textile mesh (8) so that the braided textile mesh (8) being located between the braid (6) and the support spring (5). This braid (6) is a braided mesh formed by strands of uncoated wires (6.1). Figure 2 shows this braid (6) formed by first strands (6.1.1) according to a first winding direction and a second strands (6.1.2) according to a second winding direction. As it can be observed in this figure 2, each strand (6.1.1, 6.1.2) comprises a plurality of uncoated conductive wires (6.1). The uncoated conductive wires (6.1) of the first strands (6.1.1) are arranged parallel to the first winding directions and the uncoated conductive wires (6.1) of the second strands (6.1.2) are arranged parallel to the second winding direction. The fist winding direction represents one of the directions of the braid (6) when it is weaved and the second winding direction represents the other direction of the braid (6).

Figure 2 further shows that the braid (6) is electrically connected to the first (1.1) and second (1.2) ends of the hose (1). The braid (6) of uncoated conductive wires (6.1) is able to drain electric current towards the ends (1.1, 1.2) of the hose (1) if a peak current occurs due to a direct lighting strike. In addition the uncoated conductive wires (6.1) of the braid (6) provide the required bonding for electrostatic discharge due to voltage differential between tanker and receiver. These wires (6.1) of the braid (6) are not isolated between them in order to keep the lowest resistance and lowest inductance between the ends (1.1, 1.2) of the hose (1) to maximize the current drain capability.

According to figure 1, the intermediate tubular structure (3) further comprises a first plurality (7.1) of coated conductive wires (7) and a second plurality (7.2) of coated conductive wires (7). These coated conductive wires (7) being isolated between them. The pluralities (7.1, 7.2) of coated conductive wires (7) are wound along the hose (1) above the braid (6). Specifically, this figure 2 shows how both first plurality (7.1) and second plurality (7.2) of coated conductive wires (7) are wound according to the second winding direction and each plurality interleaved between second strands (6.1.2) of the conductive wires (6.1). In another embodiment (not shown), the first plurality (7.1) of coated conductive wires (7) is wound according to the first winding direction and the second plurality (7.2) of coated conductive wires (7) is wound according to the second winding direction, or vice versa.

The coated conductive wires (7) protrude externally from the hose (1) in both the first (1.1) and second (1.2) end of the hose (1) so that these coated conductive wires (7) are electrically connected to the ends (1.1, 1.2) of the hose (1). This connection is not shown in figures.

According to figure 1, the intermediate tubular structure (3) also comprises a first breaker textile fabric (9) placed around the coated conductive wires (7) and a second breaker textile fabric (12) placed around the inner tubular structure (2) being more proximal to the inner tubular structure (2) than the support spring (5). Furthermore, the intermediate tubular structure (3) comprises intermediate layers of rubber arranged through the intermediate tubular structure (3).

All the elements that conform the intermediate tubular structure (3) such as the support spring (5), the braided textile mesh (8), the braid (6) of uncoated conductive wires (6.1) and the coated conductive wires (7), are also coaxially arranged to the longitudinal axis (X).

By last, figure 1 shows an external tubular structure (4) around the intermediate tubular structure (3) for protecting the hose (1) from the outside. This external tubular structure (4) is made of rubber, as the inner tubular structure (2).

According to the embodiment shown in figure 2, both first and second winding directions have the same pitch of the helix but different to the helix pitch of the support spring (this not shown). In another embodiment not shown, the first and/or second winding direction have a helix pitch which can be varied by comparing the uncoated conductive wires (6.1) and the coated conductive wires (7).

Figure 3 shows a tanker aircraft (10) comprising the air to air refueling hose (1) described above in relation with figures 1 and 2. Further, this figure 3 shows the hose (1) connected to the tanker aircraft (10) through it first end (1.1) and to a coupling through its second end (1.2) and in turn the coupling is connected to a drogue (11). Specifically, the first end (1.1) of the hose (1) is connected to a drum in the tanker aircraft (10) by means of a first fitting, and the connection between the second end (1.2) of the hose (1) with the coupling is provided by a second fitting. These first and second fittings provide electrical path between the braid (6) of uncoated conductive wires (6) and the tanker aircraft (10) and the drogue (11).

The coupling comprises a plurality of pressure sensors, a temperature sensors and inertial sensors (not shown in figures) and the drogue (11) comprises a plurality of proximity sensors (not shown in figures), all these sensors being in data communication with the tanker aircraft (10) through the coated conductive wires (7). The temperature sensors and the pressure sensors are configured to be in contact with the fuel that is supplying in a refueling process. For example, the first plurality (7.1) of coated conductive wires (7) is able to provide power and to transmit data from the tanker aircraft (10) to the coupling, and the second plurality (7.2) of coated conductive wires (7) is able to transmit data from the coupling to the tanker aircraft (10).

The data transmission from coupling and/or from drogue (11) to the tanker aircraft (10) is relevant for the tanker aircraft (10) in order to monitor the status and performances of the hose (1) in a refueling process. For example, the pressure is monitored in real time in order to guarantee a predefined operational pressure tolerance in the refueling process without having to estimate the pressure according to flight conditions.

In addition, data relative to the receiver contact approximation is provided by the proximity sensor to the tanker aircraft (10). This proximity sensor is configured to transmit the contact event between the drogue (11) and the receiver aircraft through electrical signal.

Moreover, in view of at least the data provided from the coupling and/or drogue (11) to the tanker aircraft (10), allows the tanker aircraft (10) to actuate the operation of the drogue (11). For example, when the receiver aircraft performs a maneuver in order to make contact with the drogue (11), the bow effect appears, which moves the drogue (11) away from receiver's probe This movement can be counterbalanced with the operation of the drogue (11) controlled from the tanker aircraft (10) so that the electrical power and commands needed for this controllable operation of the drogue (1) are sent from the tanker aircraft (10) to the drogue (11) through the first plurality (7.1) of the coated conductive wires (7) of the hose (1).

The provision of coated conductive wires (7) through the hose (1) in the way as described above for figures 1 and 2, allows to automatically detect structural damages on the hose (1) on real time. Since the coated conductive wires (7), which are the power provision and data transmission wires, are placed in the outermost part of the hose (1), in case the outer rubber (the external tubular structure (4)) is damaged, there coated conductive wires will be the first to suffer damage and before any dangerous damage in hose structural reinforcements. The present hose (1) allows constantly monitoring electrical conductivity through this coated conductive wires (7) so that if any of these coated conductive wires (7) breaks, an increase in impedance will be detected from the tanker aircraft (10) since the conductivity along the hose (1) will be degraded.

In another example (not shown), the intermediate tubular structure (3) only comprises a first plurality (7.1) of coated conductive wires (7) and it is the first plurality (7.1) of coated conductive wires (7) which provides power and transmits data from the tanker aircraft (10) to the coupling and/or drogue (11), whereas it is the support spring (5) which provides power and transmits data from the coupling and/or drogue (11) to the tanker aircraft (10).

## Claims

1. Air to air refueling hose (1) for an aircraft (10), the air to air refueling hose (1) comprising a first end (1.1) configured to be connected to the aircraft (10) and a second end (1.2) configured to be connected to a coupling that in turn is connected to a drogue (11), the air to air refueling hose (1) further comprising:
an inner tubular structure (2) for driving fuel inside,
an intermediate tubular structure (3) arranged around the inner tubular structure (2) and comprising a support spring (5), the support spring (5)
being helically wound around the inner structure (2), and
connected to first (1.1) and second (1.2) end of the air to air refueling hose (1), and
an external tubular structure (4) arranged around the intermediate tubular structure (3) in such a way that the intermediate tubular structure (3) is located between the inner tubular structure (2) and the external tubular structure (4),
wherein the intermediate tubular structure (3) further comprises:
a braided mesh (8) arranged around the support spring (5) and being made of textile or metallic material; and
a first plurality (7.1) of coated conductive wires (7) wound along the air to air refueling hose (1) over the braided mesh (8);
wherein, if the braided mesh (8) is a braided textile mesh, the intermediate tubular structure (3) further comprises a braid (6) of uncoated conductive wires (6.1) arranged around the support spring (5) so that the braided mesh (8) is located between the support spring (5) and braid (6), and the first plurality (7.1) of coated conductive wires (7) is arranged above the uncoated conductive wires (6.1) of the braid (6), this braid (6) being electrically connected to the first (1.1) and second (1.2) end of the air to air refueling hose (1) and being configured to drain electric current towards the first (1.1) and second (1.2) end of the air to air refueling hose (1); and
wherein the air to air refueling hose (1) is configured through the intermediate tubular structure (3):
to provide power from the aircraft (10) to the coupling and/or drogue (11) and
to transmit data from the aircraft (10) to the coupling and/or drogue (11) and vice versa.

2. Air to air refueling hose (1) according to the preceding claim, wherein the braided textile mesh (8) comprises high tensile strength threads made of aramid or the braided metallic mesh (8) comprises high tensile strength threads made of stainless steel.

3. Air to air refueling hose (1) according to any one of the preceding claims, wherein the intermediate tubular structure (3) further comprises a second plurality (7.2) of coated conductive wires (7) wound along the air to air refueling hose (1) and arranged above the uncoated conductive wires (6.1) of the braid (6), and wherein the air to air refueling hose (1) is configured:
to provide power and to transmit data, from the aircraft (10) to the coupling and/or drogue (11), through the first plurality (7.1) of coated conductive wires (7) and
to transmit data from the coupling and/or drogue (11) to the aircraft (10) through the second plurality (7.2) of coated conductive wires (7).

4. Air to air refueling hose (1) according to any one of claims 1 to 2, wherein the support spring (5) is electrically connected to first (1.1) and second (1.2) end of the air to air refueling hose (1), and wherein the air to air refueling hose (1) is configured:
to provide power and to transmit data, from the aircraft (10) to the coupling and/or drogue (11), through the first plurality (7.1) of coated conductive wires (7) and
to transmit data from the coupling and/or drogue (11) to the aircraft (10) through the support spring (5).

5. Air to air refueling hose (1) according to any one of the preceding claims, wherein the braid (6) is a mesh that comprises first strands (6.1.1) according to a first winding direction and second strands (6.1.2) according to a second winding direction, each strand (6.1.1, 6.1.2) comprises a plurality of uncoated conductive wires (6.1) parallel to the corresponding winding direction.

6. Air to air refueling hose (1) according to the previous claim, wherein the first plurality (7.1) of coated conductive wires (7) and the support spring (5) are arranged according to the first winding direction or to the second winding direction respectively.

7. Air to air refueling hose (1) according to claim 3 and any of claims 5-6, wherein the second plurality (7.2) of coated conductive wires (7) are arranged according to the first winding direction or to the second winding direction.

8. Air to air refueling hose (1) according to any one of the preceding claims, wherein the intermediate tubular structure (3) further comprises:
a first breaker textile fabric (9) arranged around the first plurality (7.1) of coated conductive wires (7); and
a second breaker textile fabric (12) arranged around the inner tubular structure (2) and being more proximal to the inner tubular structure (2) than the support spring (5).

9. Air to air refueling hose (1) according to any one the preceding claims, wherein the inner tubular structure (2) and the external tubular structure (4) are made of non-conductive materials, preferably rubber.

10. Air to air refueling hose (1) according to any one of the preceding claims, wherein the intermediate tubular structure (3) comprises intermediate layers of non-conductive materials, preferably rubber.

11. Air to air refueling hose (1) according to any one of the preceding claims, wherein the first (7.1) and second plurality (7.2) of coated conductive wires (7) protrude externally from the air to air refueling hose (1) in both first (1.1) and second (1.2) ends of the air to air refueling hose (1).

12. Aircraft (10) comprising an air to air refueling hose (1) according to any of the preceding claims, a coupling and a drogue (11), wherein the first end (1.1) of the air to air refueling hose (1) is connected to the aircraft (10) and the second end (1.2) of the air to air refueling hose (1) is connected to the coupling and then the drogue (11) is coupled to coupling away from the aircraft (10).

13. Aircraft (10) according to the preceding claim, wherein the coupling comprises a pressure sensor or temperature sensor or inertial sensor or any combination of the above; and/or the drogue (11) comprises a proximity sensor, and wherein these sensors are in data communication with the aircraft (10) through the air to air refueling hose (1).

14. Aircraft (10) according to any one of claims 12 to 13, wherein the first end (1.1) of the air to air refueling hose (1) is connected to a drum of the aircraft (10) by means of a first fitting, and the second end (1.2) of the air to air refueling hose (1) is connected to the coupling by means of a second fitting, and wherein this first and second fittings are configured to provide electrical path between the braid (6) of the air to air refueling hose (1) and the aircraft (10) or the drogue (11) respectively.

15. Aircraft (10) according to any one of claims 12 to 14, wherein the first end (1.1) of the air to air refueling hose (1) is connected to a central fuselage or wing pods of the aircraft (10).
